# EUROPEAN PATENT APPLICATION

(11) **EP 1 643 723 A2**
(43) Date of publication of application: **05.04.2006**
(21) Application number: 05300783.7
(22) Date of filing: 29.09.2005
(51) Int. Cl.: H04L 29/06, H04L 12/22, H04Q 7/32

(54) **Communication traffic control methods and systems**

(30) Priority: 01.10.2004 US 957480
(71) Applicant: ALCATEL, 75008 Paris (FR)
(72) Inventor: Dinescu, Gabriela, ON K2B 7T4, Ottawa (CA); McNamee, Kevin, ON K1B 4E8, Blackburn Hamlet (CA); Choyi, Vinod Kumar, ON K2A 3W5, Ottawa (CA)
(74) Representative: Hervouet, Sylvie

(57) **Abstract**

Communication traffic control techniques are disclosed. Targeted communication traffic control may be established in accordance with traffic control rules generated at a mobile communication device which is operating within a service area of a traffic control system. Communication traffic destined for or originating at the mobile communication device is then permitted or blocked by the traffic control system based on the traffic control rules. When a mobile communication device moves from a communication system service area served by one traffic control system to a service area served by a new traffic control system, any traffic control rules currently in effect at the traffic control system are preferably transferred to the new traffic control system. In some embodiments, multiple traffic control rules are aggregated before being transferred to a traffic control system.

## Description

### Field of the Invention

This invention relates generally to communications and, in particular, to controlling flow of communication traffic between communication devices.

### Background

Some level of control of communication traffic flow in a communication system is generally desirable, such as to prevent unsolicited or malicious communication traffic from compromising system security or affecting system reliability or performance, for example. In so-called Denial of Service attacks, for instance, communication equipment is flooded with traffic to the point that communication system operation is degraded and often completely interrupted.

Communication traffic control or filtering mechanisms that currently exist tend to be tailored towards fixed networks, where a centralized device or system is responsible for making decisions with respect to the type of traffic that traverses a communication system. A firewall within a corporate network, for example, controls the entry of communication traffic into the network. The same communication traffic filtering rules, established at the firewall by a network administrator, are typically applied to all communication traffic destined for all network equipment.

Although this type of conventional communication traffic control may work well in fixed networks, Denial of Service attacks and other communication traffic-related issues can be as much a problem for wireless mobile communication devices as they are for their wired counterparts. In fact, for mobile communication devices, unwanted traffic in general can be even more detrimental, given their relatively limited communication, power, and processing resources and capabilities. A further challenge for mobile communication devices is providing continued firewall or communication traffic filtering functionality as a user or mobile communication device roams between communication networks. For example, a filtering device that initially protects a mobile communication device may no longer be in the data path used by the device when it roams to a different communication network.

One attempt to address communication traffic concerns for mobile communication devices involves relying on a firewall in a wired backbone of a communication system. The firewall implements access control rules for both wired and wireless stations operating in the communication system. While this approach offers a generic set of rules to be applied across network elements, additional flexibility and granularity may be desirable.

Communication, power, and processing resources of mobile communication devices may not only be limited, as described above, but also vary with time. For example, fluctuations in received communication signal strength affect the communication resources available to a mobile communication device, and both communication and processing resources may be dependent upon battery power level, which also fluctuates with time. As such, while a generic set of rules configured at a firewall may handle Denial of Service and other malicious communication traffic, conventional firewall implementations do not support further specific communication traffic filtering or control which may be desirable to limit other unwanted traffic for particular communication devices. A user of a mobile communication device, for example, may wish to filter non-malicious communication traffic based on various criteria, such as to receive only a particular type of communication traffic or communication traffic from only particular sources in order to conserve battery power or airtime charges.

Middlebox communications (MIDCOM) architecture and framework proposals, in RFC-3303 and RFC-3304 for instance, are intended to enable seamless communications for complex software applications through so-called middleboxes, and represent another possible approach to communication traffic control. A variety of these intermediate Internet devices, which require application intelligence for their operation, is currently available. For example, datagrams pertaining to real-time streaming applications such as Session Initiation Protocol (SIP) and H.323, and peer-to-peer applications such as Napster™ and NetMeeting™, cannot be identified by merely examining packet headers and thus require embedded intelligence at communication system components for correct processing during transfer. Whereas middleboxes implementing firewall and network address translator services would thus typically require embedded software application intelligence, trusted third parties can be delegated in the MIDCOM architecture and framework to assist the middleboxes in performing their operation without resorting to embedding application intelligence at the middleboxes. This allows a middlebox to continue to provide services while keeping the middlebox application-agnostic. Thus, a trusted third party such as an application server may control middlebox firewall services.

MIDCOM thereby provides for firewall service configuration by a third party. However, as described above for conventional firewall implementations, the same firewall configuration is applied to all communication traffic destined for all communication devices served by a middlebox. Targeted control of communication traffic on a device-, user-, or subscription-specific basis, for example, and end user-initiated configuration of communication traffic control functions, which may be of particular use in conjunction with mobile communication devices, for example, are not supported in MIDCOM.

Many existing radio link protocols and mobile communication systems support location of and radio link establishment with mobile communication devices that are in a power saving mode and hence are not actively listening for delivery of communication traffic all the time or are not listening on the radio channels normally associated with delivering traffic. When communication traffic destined for a mobile communication device is received at a mobile communication network element such as a base station, a paging message is transmitted to the mobile communication device through paging channels which are typically different from traffic channels. If the mobile communication device responds to the paging message, the received traffic is forwarded.

This alerting functionality allows mobile communication devices to reduce power consumption and also decreases signalling load on the network for tracking devices that are not actively participating in traffic generation or reception. Communication traffic flow to communication devices is thereby controlled in that traffic is transmitted to a device only after the device responds to a paging message. Like the techniques described above, however, this mechanism is generally configured by administration personnel and does not provide any measure of differentiated communication traffic control. The same rule, i.e., page before forwarding, is applied to all communication traffic received by a network element. In addition, operation of this mechanism is dependent upon both the network element, which sends the paging message, and the communication device, which must respond in order to receive communication traffic.

### Summary of the Invention

There remains a need for configurable communication traffic control methods and systems which provide communication device-specific control of communication traffic.

In mobile communication networks, transfer of communication traffic control rules between network elements such that communication traffic control rules effectively "follow" a mobile communication device as it is moved, may also be preferred.

A further need remains for a configurable traffic control mechanism which would minimize the signalling load introduced into a communication system.

According to one aspect of the invention, a communication traffic control method for a mobile communication device is provided. The method includes determining that a mobile communication device is operating within a service area of a traffic control system, generating at the mobile communication device a traffic control rule for controlling communication traffic destined for or originating from the mobile communication device where the mobile communication device is operating within a service area of a traffic control system, and outputting the traffic control rule for transmission to the traffic control system to establish targeted traffic control at the traffic control system in accordance with the traffic control rule.

A mobile communication device is also provided. The mobile communication device determines that it is operating within a service area of a traffic control system, generates a traffic control rule for controlling communication traffic, if it is operating within a service area of a traffic control system, and outputs the traffic control rule for transmission to the traffic control system to establish targeted traffic control at the traffic control system in accordance with the traffic control rule.

In accordance with a further aspect of the invention, a method of controlling communication traffic destined for or originating at a mobile communication device includes receiving from a mobile communication device, which has been determined to be operating within a service area of a traffic control system, a traffic control rule for controlling communication traffic destined for or originating at the communication device, and establishing at the traffic control system targeted traffic control in accordance with the traffic control rule.

A related system for controlling transmission of communication traffic receives a traffic control rule and establishes at the traffic control system targeted traffic control in accordance with the traffic control rule.

A method of controlling flow of communication traffic in accordance with a traffic control rule established at a traffic control system, according to yet another aspect of the invention, includes detecting that a mobile communication device has moved from a communication system service area served by the traffic control system to a new service area served by a new traffic control system, and establishing at the new traffic control system, responsive to the detecting, communication traffic control in accordance with the traffic control rule for communication traffic destined for or originating at the mobile communication device.

In another aspect, the invention provides a system for controlling flow of communication traffic in accordance with a traffic control rule established at a traffic control system. The system detects that a mobile communication device has moved from a communication system service area served by the traffic control system to a new service area served by a new traffic control system, and establishes at the new traffic control system, responsive to the detecting, communication traffic control in accordance with the traffic control rule for communication traffic destined for or originating at the communication device.

A communication traffic control method in accordance with a still further aspect of the invention includes receiving a plurality of traffic control rules for controlling communication traffic, aggregating the respective traffic control rules, and outputting the aggregated traffic control rules for transmission to a plurality of traffic control systems to establish communication traffic control at the plurality of traffic control systems in accordance with the plurality of traffic control rules.

A related system for establishing communication traffic control receives a plurality of traffic control rules for controlling communication traffic, aggregates the respective traffic control rules, and outputs the aggregated traffic control rules for transmission to a plurality of traffic control systems to establish communication traffic control at the plurality of traffic control systems in accordance with the plurality of traffic control rules.

Another aspect of the invention provides method of establishing communication traffic control at a traffic control system. The method involves receiving at a traffic control system aggregated traffic control rules for controlling communication traffic. The aggregated traffic control rules may include traffic control rules which are received from at least one communication device, aggregated, and transmitted to a plurality of traffic control systems by an intermediate system. The method also includes establishing communication traffic control for communication traffic received at the traffic control system in accordance with at least one of the traffic control rules.

Other aspects and features of embodiments of the present invention will become apparent to those ordinarily skilled in the art upon review of the following description of specific illustrative embodiments of the invention.

### Brief Description of the Drawings

Examples of embodiments of the invention will now be described in greater detail with reference to the accompanying drawings, in which:
Fig. 1 is a block diagram of a communication system in which embodiments of the invention may be implemented;
Fig. 2 is a flow diagram of a method according to an embodiment of the invention;
Fig. 3 is a flow diagram of a method according to another embodiment of the invention;
Fig. 4 is a signal flow diagram illustrating signalling between components of a communication system;
Fig. 5 is a block diagram of a particular type of communication system implementing an embodiment of the invention;
Fig. 6 is a block diagram of a communication system implementing a further embodiment of the invention;
Fig. 7 is a block diagram of an illustrative example communication device;
Fig. 8 is a block diagram of an illustrative example traffic control system;
Fig. 9 is a block diagram of an illustrative example intermediate system;
Fig. 10 is a block diagram of a communication system in which an intermediate system configured for traffic control rule propagation is implemented;
Fig. 11 is a flow diagram of a method according to another embodiment of the invention;
Fig. 12 is a block diagram of a communication system to which the method of Fig. 11 may be applied;
Fig. 13 is a signal flow diagram illustrating signalling between components of a communication system in performing the operations shown in Fig. 11;
Fig. 14 is a flow diagram showing a method in accordance with yet another embodiment of the invention;
Fig. 15 is a signal flow diagram illustrating signalling between components of a communication system in performing the operations shown in Fig. 14; and
Fig. 16 is a signal flow diagram illustrating signalling between components of a communication system in an illustrative example application of an embodiment of the invention to control paging messages in a mobile communication network.

### Detailed Description of Preferred Embodiments

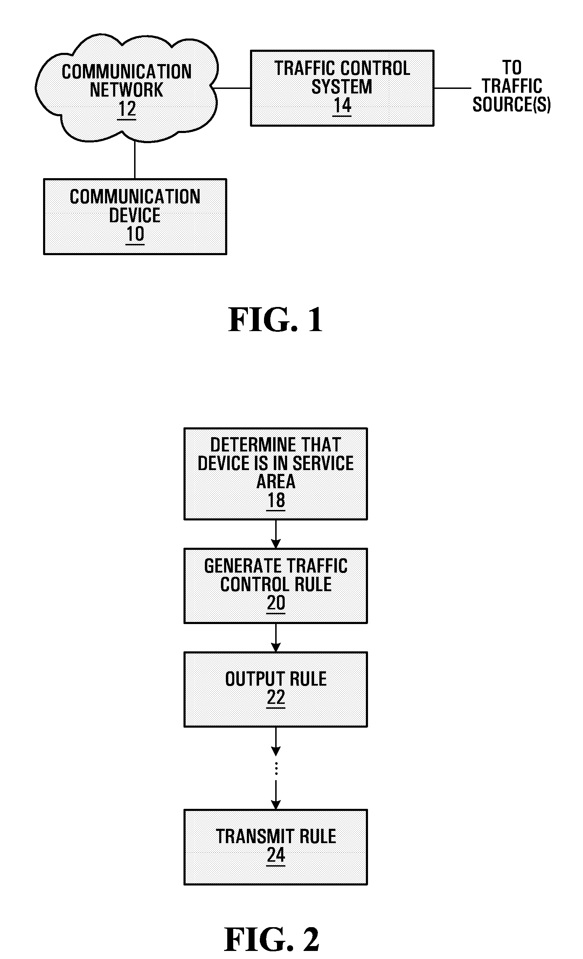

Fig. 1 is a block diagram of a communication system in which embodiments of the invention may be implemented. The communication system in Fig. 1 includes a communication device 10, a communication network 12, and a traffic control system 14 through which one or more communication traffic sources send communication traffic to the communication device 10. Although many communication devices 10 and traffic control systems 14 may be connected to the communication network 12, only one example of each type of system has been shown in Fig. 1 to avoid congestion. It should therefore be appreciated that the system of Fig. 1, as well as the contents of the other drawings, are intended solely for illustrative purposes, and that the present invention is in no way limited to the particular example embodiments explicitly shown in the drawings and described herein.

The communication device 10 represents communication equipment configured to at least receive and possibly send communication traffic through the communication network 12. Thus, communication traffic control as disclosed herein may be applied to communication traffic destined for a communication device, transmitted by a communication device, or both.

In one embodiment, the communication device 10 is a mobile communication device and the communication network 12 is a mobile communication network. A mobile communication device generally incorporates a receiver and possibly a transmitter connected to one or more antennas. The same antenna(s) may be used by both a receiver and a transmitter, or separate receive and transmit antennas may be provided. Electromagnetic communication signals which propagate through the air and excite the receive antenna(s) are detected and processed by the receiver, whereas the transmitter outputs to the transmit antenna(s) signals to be transmitted. The signals are then converted by the transmit antenna(s) into electromagnetic signals which propagate from the communication device. Those skilled in the art of communications will be familiar with the operation of many different types of mobile communication devices having the above general structure.

GSM, GPRS, CDMA and UMTS represent examples of known wireless communication schemes for which communication devices and networks have been developed, although other types of devices and networks, including wired and wireless devices and networks, are also contemplated.

The traffic control system 14 is an element of the communication system which receives communication traffic destined for and possibly transmitted by the communication device 10, and thereby provides a gateway between the communication device 10 and one or more traffic sources. As those skilled in the art will appreciate, communication traffic destined for or originating with the communication device 10 normally traverses equipment operated by a communication service provider. Therefore, in one embodiment, the traffic control system 14 is implemented within the communication network 12 by a service provider which provides communication services to the communication device 10.

It should be appreciated, however, that providing communication traffic control for communication devices in accordance with embodiments of the invention may instead involve communication traffic control at the communication device 10 itself. This approach may benefit from a faster reaction time in that traffic control rules are established directly at a communication device, but may also increase battery power consumption, processor load, and communication resource consumption at the communication device and the communication network 12.

Thus, the traffic control system 14 may be implemented at a communication system component, illustratively an Access Point (AP), Base Transceiver Station (BTS), wireless switch, or Gateway GPRS (General Packet Radio Service) Support Node (GGSN) of the communication network 12, within the communication device 10, or as a stand-alone device or system.

The communication network 12 may be virtually any type of communication network. For example, where the communication device 10 is a wireless communication device, then the communication network 12 is a wireless communication network, such as a GPRS network. In a preferred embodiment, the communication network 12 is coupled to communication traffic sources in a further communication network, such as the Internet, through the traffic control system 14.

Communications between the communication device 10, the traffic control system 14, and communication traffic sources may involve many different types of connection over which communication signals are exchanged. As those skilled in the art will appreciate, these connections may include wired connections, wireless connections, or some combination thereof. The particular types of communication connections may be dependent upon the type of the communication network 12 and the protocols used therein, the services offered by service providers using the communication network 12, and the types of equipment at the communication device 10, the traffic control system 14, and the communication traffic sources, for instance.

In operation, the traffic control system 14 controls communication traffic destined for or originating at the communication device 10 in accordance with traffic control rules generated at the communication device 10, as described in further detail below.

Fig. 2 is a flow diagram of a method according to an embodiment of the invention. The method begins at 18 with an operation of determining that a mobile communication device is operating within a service area of a traffic control system. This determination may be made, for example, based on discovery of a traffic control service by the communication device or a notification received by the communication device from a traffic control system or some other component in a communication network, for example. Those skilled in the art will be familiar with discovery, announcing, advertisement, and other services which may be provided in communication networks and suitable to accomplish the operation at 18.

The method proceeds at 20 with an operation of generating, at a communication device, a traffic control rule which specifies a traffic control condition for controlling communication traffic destined for or originating at the communication device. The rule is output at 22 for transmission to a traffic control system to establish targeted traffic control at the traffic control system in accordance with the traffic control rule.

Targeted traffic control may be communication device-specific, user-specific, or subscription-specific, for example. Communication-device specific traffic control would control communication traffic which is destined for or originates with a particular communication device, whereas user-specific traffic control would control communication traffic which is destined for or originates with a particular user identified by a user name for instance, and subscription-specific traffic control would control communication traffic which is destined for or originates with a particular subscription such as an e-mail account. In the cases of user-specific and subscription-specific traffic control, traffic control rules may be applied to communication traffic which is destined for or originates with not only the communication device, but also other communication devices used by the same user or in conjunction with the same subscription.

Further targeted traffic control schemes may also be apparent to those skilled in the art, and the invention is in no way limited to any particular traffic control targeting scheme.

If a traffic control system supports different types of targeted traffic control, a communication device may include in a traffic control rule an indication of the type of targeting to be used by the traffic control system in applying the rule.

At 24, the traffic control rule is transmitted to the traffic control system. As shown, the rule might not be transmitted immediately after it is generated. The rule may be stored for later transmission or different components of a communication device may be responsible for generating and transmitting traffic control rules, for example. However, substantially immediate transmission of a traffic control rule may be preferred in order to avoid delays in establishing the traffic control rule at a traffic control system.

References herein to traffic control rules are not intended to imply any particular format or expression of such rules. For example, a rule as generated at communication device may be formatted into a traffic control request or message for transmission to a traffic control system. A rule which is generated and expressed in one particular format at a communication device may thus be transmitted to a traffic control system in a somewhat different format. Establishment of a traffic control rule at a traffic control system may similarly involve processing of a rule to convert the rule into a format which is usable by a traffic controller or filter, for instance. Thus, although the term "rule" is used consistently herein to indicate a criterion on the basis of which communication traffic is to be controlled, it should be appreciated that a rule need not necessarily be maintained in any particular format within a communication system or expressed in the same way at all communication system components.

A traffic control rule may include, for instance, a permissive traffic control rule or a blocking traffic control rule. Communication traffic which satisfies a permissive traffic control rule is transmitted from a traffic control system to a communication device or another destination if the communication traffic originated with a communication device, whereas communication traffic which satisfies a blocking traffic control rule is not transmitted from the traffic control system. Traffic control at a traffic control system may thereby be established to permit or block communication traffic on the basis of traffic control rules.

Illustrative examples of information which may be specified in a traffic control rule include identifiers of particular sources of communication traffic, types of communication traffic, and priorities of communication traffic. Other criteria upon which traffic control rules may be based are also possible.

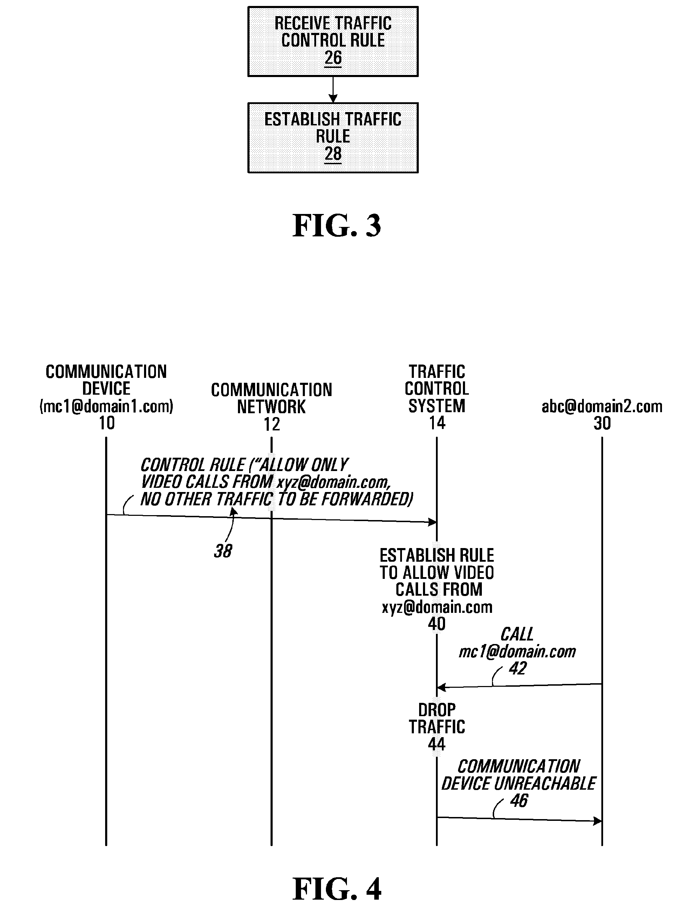

Fig. 3 is a flow diagram of a method according to another embodiment of the invention. Whereas Fig. 2 illustrates a communication traffic control method from the perspective of a communication device, Fig. 3 illustrates a method from the perspective of a traffic control system.

The method of Fig. 3 begins at 26 with an operation of receiving a traffic control rule from a communication device. As described above with reference to Fig. 2, the mobile communication device is determined to be operating within a service area of a traffic control system. This determination might be performed at the traffic control system, in that the traffic control system may detect that the mobile communication device has roamed into its service area, for example, or at the mobile communication device.

At 28, responsive to receiving the traffic control rule, the traffic control system establishes the traffic control rule to thereby implement targeted traffic control for communication traffic destined for or originating the communication device.

The operation of establishing the traffic control rule at 28 may involve extracting the traffic control rule from a received traffic control request or message, depending upon the transfer mechanism used to transmit rules. The traffic control rule is then implemented at the traffic control system, by storing the traffic control rule in a memory for subsequent access during communication traffic processing, for example.

The traffic control system thereafter determines whether received communication traffic should be transmitted or blocked. In the event that communication traffic is blocked, the traffic control system may simply drop the communication traffic. The traffic control system may also perform further operations, including acknowledging that communication traffic has been transmitted and notifying a source of the communication traffic that the communication traffic has been blocked, for example.

The foregoing description relates primarily to establishing a traffic control rule at a traffic control system responsive to receiving the rule from a communication device. It should be appreciated, however, that communication traffic control in accordance with embodiments of the invention need not be exclusive of other types of communication traffic control. For example, a traffic control system may also provide for more generic traffic control for multiple communication devices. In this case, a traffic control system is configurable by both a system administrator and communication device users.

Fig. 4 is a signal flow diagram illustrating signalling between components of a communication system according to one illustrative implementation of the methods of Figs. 2 and 3. In Fig. 4, the communication device 10 has an associated address in the communication network 12 (Fig. 1) of mc1@domain1.com, and a communication traffic source, identified by an address abc@domain.com, is represented at 30.

At 38, the communication device 10 sends a traffic control rule to the traffic control system 14 through the communication network 12. The traffic control rule specifies that all communication traffic except video calls from xyz@domain.com are to be blocked. All other communication traffic is to be blocked. The traffic control system 14, responsive to receiving the rule, establishes the traffic control rule to allow video calls from xyz@domain.com at 40. The communication traffic source 30 attempts a call to the communication device 10 at 42. In accordance with the traffic control rule received from the communication device 10, however, the traffic control system drops the call from the source abc@domain2.com 30 at 44, and also transmits at 46 a notification to the source 30 that the communication device 10 is unreachable.

Although not explicitly shown in Fig. 4, it should be appreciated that the traffic control system 14 would attempt to complete a video call from xyz@domain.com to the communication device 10. It should also be appreciated that communication traffic destined for any other communication devices served by the traffic control system 14 would not be affected by the traffic control rule received from the communication device 10.

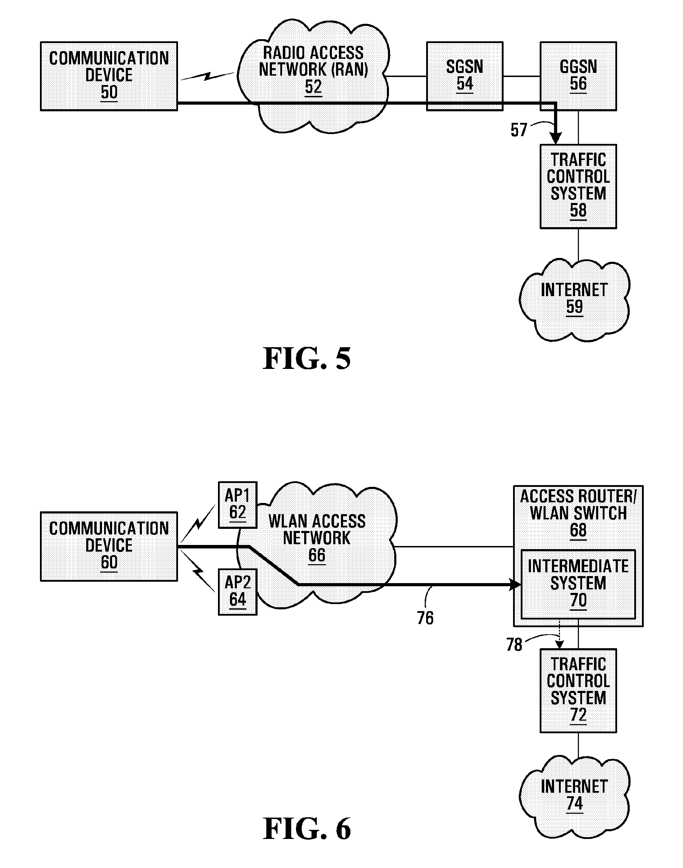

As described briefly above, a traffic control system may be implemented either within a communication device or externally, at a separate component of a communication system. Fig. 5 is a block diagram of a particular type of communication system in which an embodiment of the invention is implemented. The illustrative example communication system of Fig. 5 includes a communication device 50 which is configured for operation in a GPRS communication network. Those skilled in the field of communications will be familiar with GPRS communication networks, as well as the structure and operation of the Radio Access Network (RAN) 52, the Serving GPRS Support Node (SGSN) 54, and the GGSN 56. As shown, the GGSN 56 is coupled to the Internet 59 through the traffic control system 58. Of course, other scenarios may place the traffic control system in the RAN 52, the SGSN 54, or the GGSN 56, as a stand-alone or integrated system.

Transmission of traffic control rules generated at the communication device 50 to the traffic control system 58 is represented at 57. As described above, communication traffic destined for or originating with the communication device 50 is controlled by the traffic control system 58 on the basis of traffic control rules received from the communication device 50. Communication traffic received by the traffic control system 58 is either dropped or transmitted in accordance with any traffic control rules which have been established.

The system of Fig. 5 represents one possible topology for implementation of communication traffic control. The traffic control system 58 may be used to provide communication traffic control for communication devices served by the GGSN 56.

Fig. 6 is a block diagram of a communication system implementing a further embodiment of the invention. In the system of Fig. 6, a communication device 60 is configured to access a communication network, in the form of a Wireless Local Area Network (WLAN) access network 66, through any of multiple access points (APs) AP1 62 and AP2 64. The access points AP1 62 and AP2 64 thereby provide the communication device 60 with access to the WLAN 66. The access router/WLAN switch 68 couples the WLAN 66 to a traffic control system 72, which controls communication traffic originating in the Internet 74 and destined for the communication device 60. WLANs and their operation will be well known to those skilled in the art.

In Fig. 6, the WLAN 66 represents a further example of a communication network in which embodiments of the invention may be implemented. Fig. 6 also introduces an intermediate system 70 which may be implemented as shown at the switch 68. The location of the intermediate system 70 at the switch 68 in Fig. 6 is intended for illustrative purposes. The intermediate system 70 may instead be located elsewhere in a data path, such as at a base transceiver station (BTS) or AP 62, 64 or another communication system component within or outside the WLAN 66. Location of the intermediate system 70 outside the data path is also possible, within an access network or in a communication device's home network in the case of a mobile communication device, for example. Instead of communicating directly with the traffic control system 72, the communication device 60 transmits traffic control rules to the intermediate system 70.

Therefore, embodiments of the invention may enable a communication device to request that targeted traffic control be implemented in any of two ways. One approach involves direct communication between the communication device and a traffic control system, which may be a firewall, a Short Message Service (SMS) filter, or a Multimedia Message Service (MMS) filter, for example. The communication device interacts directly with the traffic control system, and thus addresses the traffic control rules or messages containing the rules to the communication system element responsible for implementing communication traffic control. There are no specialized intermediary software or hardware components in this configuration, as the communication device communicates directly with a traffic control system.

In the second approach, an example of which is shown in Fig. 6, the communication device 60 communicates with the intermediate system 70, which forwards traffic control rules to the traffic control system 72 on behalf of the communication device 60. A traffic control rule generated at the communication device 60 is transmitted to the intermediate system 70, which receives the traffic control rule from the communication device 60 and then transmits the traffic control rule to the traffic control system 72. These two operations are represented in Fig. 6 at 76 and 78.

The intermediate system 70 may forward a traffic control rule to the traffic control system 72 without substantially affecting the content or format of the rule. This may be accomplished by changing a destination address of a message which contains the rule or incorporating the rule or message into a further message, for example. More substantive processing of a traffic control rule by an intermediate system is also contemplated, as described in further detail below. References herein to an intermediate system forwarding a traffic control rule to a traffic control system should be interpreted accordingly.

It will now be apparent that the operation at 24 in Fig. 2 may involve transmitting a traffic control rule to either a traffic control system directly or to an intermediate system which transmits the traffic control rule to a traffic control system. Similarly, the operation of receiving a traffic control rule at 26 in Fig. 3 may involve receiving a traffic control rule from the communication device at either a traffic control system or an intermediate system. In the latter case, the establishing operation at 28 involves transmitting the traffic control rule from the intermediate system to the traffic control system and then establishing the traffic control rule at the traffic control system.

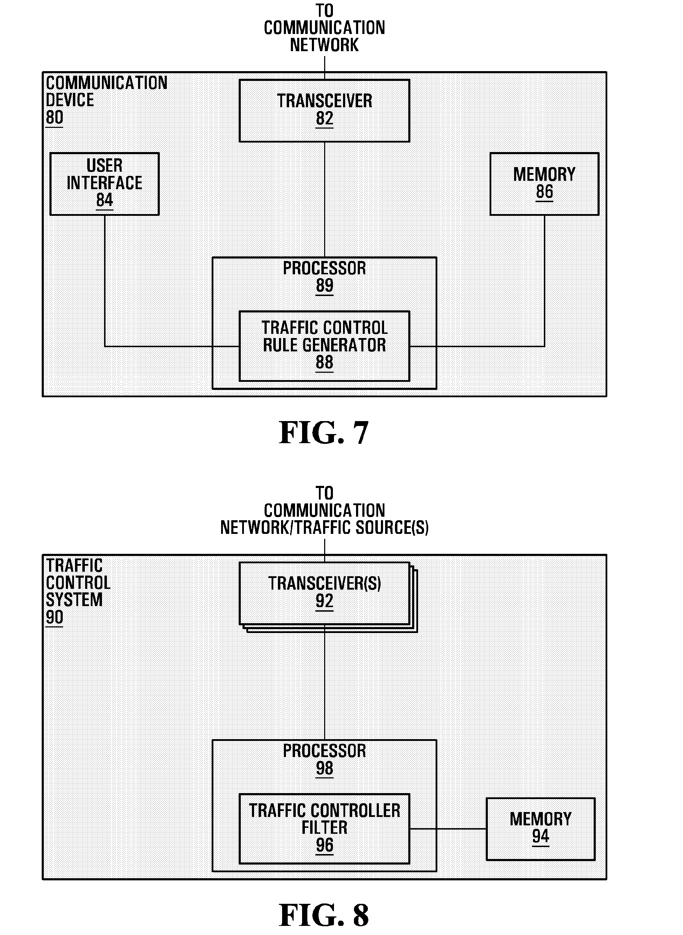

Fig. 7 is a block diagram of an illustrative example communication device according to an embodiment of the invention. The communication device 80 includes a traffic control rule generator 88, illustratively implemented within a processor 89 which is connected to a user interface 84, a transceiver 82, and a memory 86. A communication device may include further components which have not been explicitly shown in Fig. 7 to avoid congestion. It will also become apparent from the following description that embodiments of the invention need not necessarily include all of the elements shown in Fig. 7. Thus, embodiments of the invention may be implemented in communication devices which include fewer or further elements than those shown in Fig. 7.

The transceiver 82 enables the communication device 80 for communication in a communication network. In one embodiment, the transceiver 82 is a wireless transceiver which is controlled by the processor 89 and software stored in the memory 86 for operation in a wireless communication network. Many different types of transceiver 82 may be implemented in the communication device 80. Although a communication device may include a single transceiver for communication with both a traffic control system or intermediate system and communication traffic sources through the same communication network, embodiments of the invention may be applied to communication devices having multiple transceivers.

The user interface 84 represents one or more elements for receiving inputs from a user. A keyboard and a mouse are examples of elements for receiving user inputs, whereas a touchscreen display provides both input and output functionality. Other types of user interface elements will be apparent.

The memory 86 represents a local memory device, and may include, for example, any of solid state memory devices, disk drives, and other memory devices adapted to operate with fixed or removable memory media. Mobile communication devices, for instance, typically include solid state memory devices as the memory 86.

In the embodiment shown in Fig. 7, the traffic control rule generator 88 is implemented in a processor 89. The processor 89 may be a microprocessor which executes software stored in the memory 86, for example. The traffic control rule generator 88 and/or the processor 89 may instead be implemented as a microcontroller, an ASIC, or other processing element. Embodiments of the invention may be implemented using either dedicated components or components which also perform other functions. For example, the processor 89 may execute operating system software and software applications to support functions other than those disclosed herein.

The traffic control rule generator 88 is operative to generate and output a traffic control rule for controlling communication traffic destined for or originating with the communication device 80, in the manner described above. The traffic control rule is transmitted by the transceiver 82 to a traffic control system or an intermediate system. When implemented in a processor as shown in Fig. 7, the processor 89 is configured to perform these operations by software stored in the memory 86.

The user interface 84 provides a mechanism for a user to input traffic control rules or information for use in generating traffic control rules. For example, a user might select from an address book or contact list stored in the memory 86 an address or identifier of a particular communication source and invoke a "block" or analogous function or command to cause a blocking traffic control rule to be generated. Other traffic control rule generation scenarios and input mechanisms are also possible.

Fig. 8 is a block diagram of an illustrative example traffic control system according to an embodiment of the invention. The traffic control system 90 includes a traffic controller or filter 96, implemented within a processor 98 which is connected to one or more transceivers 92, and a memory 94. Like the communication device 80 described above with reference to Fig. 7, actual implementations of a traffic control system may include fewer or further components than those explicitly shown in Fig. 8.

The traffic control system 90 includes one or more transceivers 92 to enable the traffic control system to communicate with both a communication device and communication traffic sources. Where other communication system components handle any interoperability issues between a communication device and communication traffic sources, a single transceiver 92 will generally suffice. Separate transceivers may be provided to support communication in different types of communication networks, for example.

A mobile cellular network generally includes a wireless communication devices that communicate directly with a wireless access network, referred to herein as a RAN, which communicates with a wired backbone network, also known as the mobile core network. The mobile core network communicates with the Internet. The mobile core network is generally specific to the type of technology being used. For example, a mobile core of UMTS cannot in principle work with a wireless network of CDMA and vice-versa. The mobile core network therefore acts the "glue" between the wireless access network and the Internet, performing functions of address management, connection management, and the like.

In a WLAN network, there is generally no RAN but wireless communication devices communicate directly to APs which are then connected to the wired backbone. Wired backbone networks are not mobile-aware, unlike cellular networks, but include general network elements such as routers/switches in a fixed network. Therefore, irrespective of the wireless access technology, the wired backbone networks do not change and are agnostic to the wireless technology. Although there is typically no RAN in a WLAN access network, APs can be further connected to WLAN switches and thus, in a way, there is a small access network which then connects to the wired backbone.

The RAN therefore has two types interfaces, including one to the wired backbone (generally wired interface) and the other to wireless communication devices (wireless interface). The wired backbone also has two interfaces, including one to the RAN (generally wired) and the other to the Internet (wired interface). Accordingly, traffic control system may include multiple transceivers 92 or interfaces, depending upon where it is implemented.

Although shown in Fig. 8 as being within the traffic control system 90, the transceiver(s) 92 may be external to the traffic control system 90 or shared with other components. The traffic control system 90 need not include its own transceiver(s) 92 when implemented in conjunction with a GGSN or other communication system element which includes a transceiver, for example.

The memory 94, like the memory 86 (Fig. 7), represents a local memory device. However, a traffic control system may be implemented at or incorporated into a communication system component which is not as constrained as a communication device, and therefore implementation of the memory 94 as other than a solid state device may be more feasible.

In Fig. 8, the traffic controller 96 is implemented in the processor 98 which, like the processor 89 of Fig. 7, may be a microprocessor which executes software stored in the memory 94. The traffic controller 96 and/or the processor 98 may similarly be implemented as a microcontroller, an ASIC, or other processing element.

The processor 98 and the memory 94 may or may not be dedicated to communication traffic control. Embodiments of the invention which are based in software, for instance, are particularly suited to integration with other functions of communication system components. In the above example of a GGSN, implementation of an embodiment of the invention may involve installing new software at the GGSN without any additional hardware. Thus, the traffic control system 90 may be implemented using components which are shared with other systems but configured by software to operate in a particular manner.

The traffic controller 96 is operative to receive a traffic control rule and to establish, responsive to receiving the traffic control rule, targeted traffic control in accordance with the traffic control rule for communication traffic destined for or originating at the communication device. In the traffic control system 90, the operation of establishing may involve storing information relating to the traffic control rule and targeting information in the memory 94. As described above, communication traffic control may be communication device-, user-, or subscription-specific, for example, and accordingly the targeting information may identify a communication device, a user, or a subscription. The traffic controller 96 may then access the memory 94 to determine whether communication traffic destined for or originating at the communication device should be transmitted or blocked.

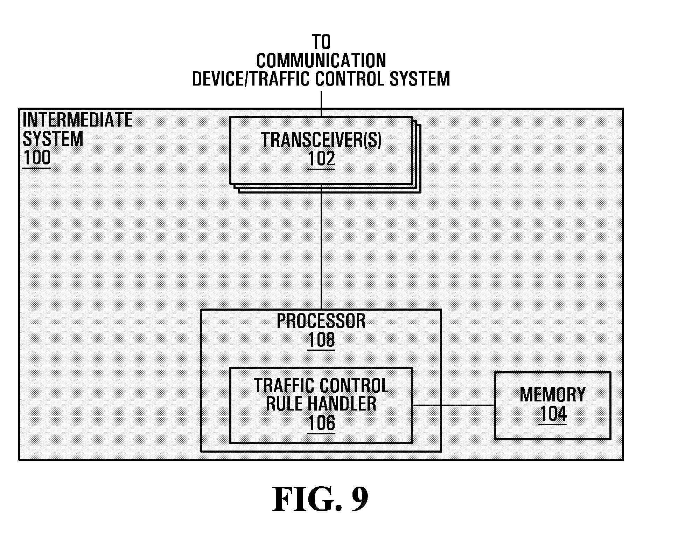

Fig. 9 is a block diagram of an illustrative example intermediate system 100. The structure of the intermediate system 100 is substantially similar to that of the traffic control system 90 of Fig. 8, including a processor 108 connected to one or more transceivers 102 and a memory 104. In the intermediate system 100, communication with a communication device and a traffic control system is enabled by the transceiver(s) 102. The intermediate system 100 further differs from the traffic control system 90 in that it includes a traffic control rule handler 106 implemented in the processor 108.

The traffic control rule handler 106 receives traffic control rules from one or more communication devices and establishes the traffic control rules at a traffic control system. The operation of establishing communication traffic control at the traffic control system may entail transmitting each traffic control rule or a processed version thereof to the traffic control system, as described above.

Although embodiments of the invention may be implemented with or without an intermediate system, an intermediate system implementation may be advantageous. For example, an intermediate system may propagate traffic control rules to multiple traffic control systems and/or aggregate multiple traffic control rules for transmission to one or more traffic control systems.

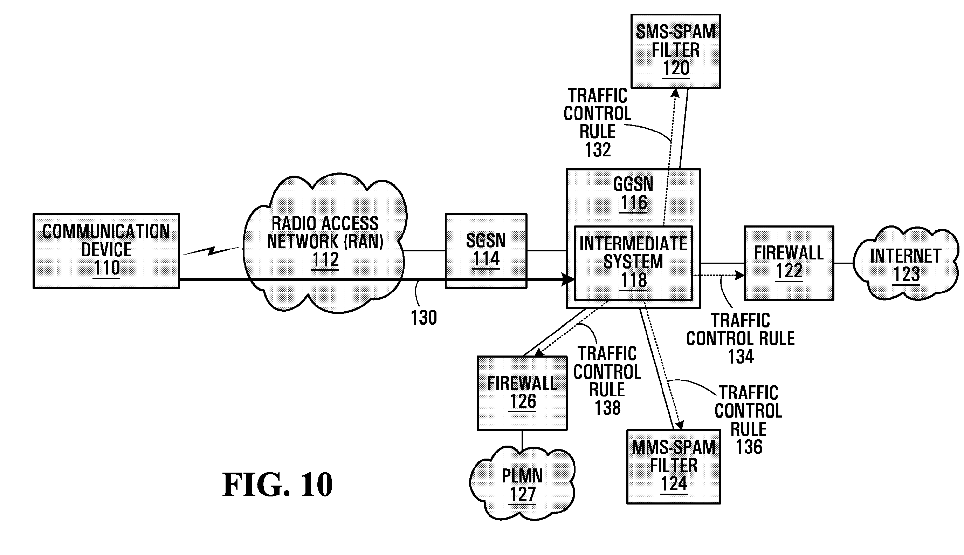

Fig. 10 is a block diagram of a communication system in which an intermediate system configured for traffic control rule propagation is implemented. The core communication network of Fig. 10 is similar to the GPRS network of Fig. 5, including a RAN 112 in which a communication device 110 is configured to operate, an SGSN 114, and a GGSN 116. The GGSN 116 is connected to multiple traffic control systems, including an SMS spam filter 120, a firewall 122 which is connected to the Internet 123, an MMS spam filter 124, and a firewall 126 which is connected to a Public Land Mobile Network (PLMN) 127. An intermediate system 118 is implemented at the GGSN 116.

The intermediate system 118 receives from the communication device 110 a traffic control rule, represented at 130, and sends the traffic control rule to multiple traffic control systems at 132, 134, 136, 138. Each of the SMS spam filter 120, the firewalls 122 and 126, and the MMS spam filter 124 then establishes communication traffic control in accordance with the traffic control rule originally received by the intermediate system 118. In this manner, the intermediate system 118 effectively acts as a proxy for the communication device 110 to establish traffic control rules at multiple traffic control systems responsive to a single transmission of the traffic control rule from the communication device 110.

Many different mechanisms may be implemented at the intermediate system 118 to support traffic control rule propagation. For example, the intermediate system may simply forward received traffic control rules to all known traffic control systems. The intermediate system 118 may instead process a received traffic control rule to determine to which traffic control systems the rule may be applicable. A priority-based rule, for instance, may be applicable only to certain types of communication traffic. As described above, the intermediate system 118 may also perform processing operations which affect the content or format of traffic control rules.

One type of substantive traffic control rule processing which may be performed by the intermediate system 118 is format or protocol conversion. An advantage of this approach is that the communication device 110 does not deal with interoperability issues, since it is only the intermediate system 118 which communicates with various traffic control systems, i.e., the SMS/MMS filters 120, 124 and the firewalls 122, 126 in Fig. 10. Communications between the intermediate system 118 and the various traffic control systems could be achieved via a common interface such as MIDCOM, with the intermediate system 118 handling propagation and any necessary traffic control rule format conversion functions. An interface between the communication device 110 and the intermediate system 118 could then be optimized for communication device 110 and RAN 112 resource conservation, for example.

An additional advantage of an intermediate system such as 118 is the relative ease of establishing trust between traffic control systems and an intermediate system or a communication system component which implements intermediate system functionality within an access network or a home network. Establishing trust between each communication device and the traffic control system(s) which are to be configured by the communication device may be significantly more difficult.

For example, if a communication device is associated with a particular AP and WLAN switch, then some authentication mechanism has been performed between the AP/switch and the communication device, such that the AP/switch trusts the communication device. The AP/switch and a traffic control system would be parts of the same infrastructure and a preestablished trust, such as a Security Association, would thus normally exist between the AP/switch and the traffic control system. Therefore, traffic control rules sent by the AP/switch on behalf of communication device can be viewed by the traffic control system to be authentic, and no trust relationship need exist between the communication device and the traffic control system. Since the number of communication devices served by a traffic control system could be in the hundreds of thousands or even more, scalability could become an issue if communication devices were required to have direct Security Associations with traffic control systems. The intermediate system approach may thereby reduce scalability concerns.

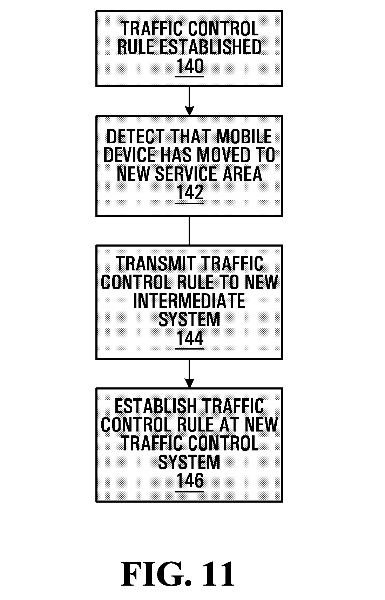

Fig. 11 is a flow diagram of a method according to another embodiment of the invention. The method of Fig. 11 provides for rule or "context" transfer between traffic control systems and/or intermediate systems, such that communication traffic control rules established for a communication device or user "follow" the device or user when moving within a communication system. This mobility issue is of particular concern for mobile communication devices.

At 140, a communication traffic control rule for a mobile communication device is established at a traffic control system. The establishment of the traffic control rule at 140 may, but need not necessarily, be as described above.

Next, at 142, movement of the mobile communication device from a service area served by the traffic control system to a new service area served by a new traffic control system or intermediate system is detected. Where a traffic control system or intermediate is implemented at a GGSN as described above, then traffic control system or intermediate system service areas are substantially the same as mobile communication network coverage areas. However, it should be appreciated that traffic control systems, intermediate systems, and other communication system components may have different service areas.

If the new service area is served by a new intermediate system, then any traffic control rules which were established at 140 are transmitted to the new intermediate system at 144. At 146, the traffic control rule is established at the new traffic control system if the new service area is served by a new traffic control system. Of course, if multiple traffic control rules had been established for the communication device at 140, all of the rules are preferably transmitted at 144 and/or established at 146.

The method of Fig. 11 may be further illustrated by considering several example scenarios.

In a communication system which supports direct communication between communication devices and traffic control systems, either the communication device or a current traffic control system may detect that the communication device has entered, or is about to enter, a new service area. Many techniques for detecting handoffs or imminent handoffs of communications within a mobile communication network are known and would be suitable to accomplish the detection at 142 where mobile network coverage areas overlap traffic control system and intermediate system service areas.

Similarly, either the communication device or the current traffic control system may transfer traffic control rules to the new traffic control system. However, it should be noted that detection and context transfer need not necessarily be performed by the same device or system. For example, a mobile communication device might detect that a handoff to a new communication network element is imminent and advise a current traffic control system accordingly. The traffic control system may then establish any traffic control rules at another traffic control system.

Where a communication system also includes intermediate systems, a communication device, an intermediate system, or a traffic control system might track the location of a mobile communication device. If the mobile communication device moves between the service areas of two intermediate systems, then information is preferably transferred to a new intermediate system by the mobile communication device, a current intermediate system, or possibly a current traffic control system. Communication traffic control rules are then established at a new traffic control system, if necessary, by transmitting the traffic control rules from the new intermediate system for instance. In some cases, a current service area and a new service area with different intermediate systems may be served by the same traffic control system, and as such, communication traffic control for the new service area is already provided by the current traffic control system.

A mobile communication device may also move between service areas which are served by the same intermediate system but different traffic control systems. The intermediate system may establish communication traffic control rules at a new traffic control system substantially as described above.

Thus, in some embodiments, communication traffic control context transfer operations may involve components other than a traffic control system at which communication traffic control rules have been established. As such, traffic control rules may be stored at a mobile communication device, an intermediate system, or both, for retransmission to a new intermediate system or traffic control system when the mobile communication device moves between service areas. A mechanism which provides for retrieval of established traffic control rules from a traffic control system represents one possible alternative to local storage of traffic control rules by a communication device or an intermediate system. Traffic control rules may then be retrieved from a current traffic control system and transmitted to a new intermediate system and/or traffic control system when a communication device is moved into a new service area.

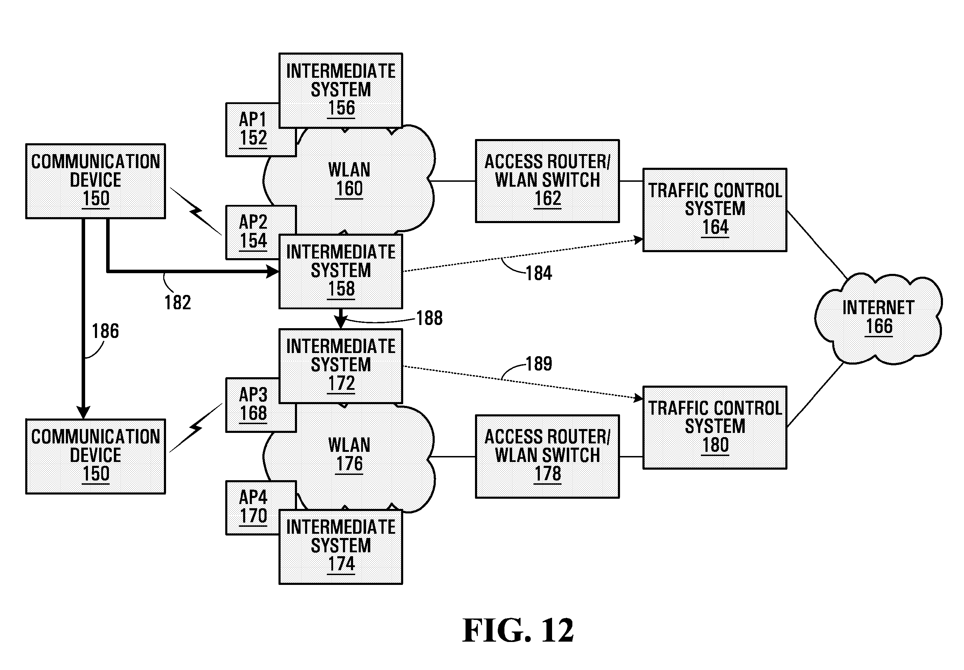

Fig. 12 is a block diagram of a communication system to which the method of Fig. 11 may be applied. The communication system includes WLANs 160 and 176 having access points AP1 152, AP2 154 and AP3 168, AP4 170 which provide WLAN access for the communication device 150. Respective intermediate systems 156, 158, 172, 174 implemented at the access points 152, 154, 168, 170 manage communication traffic control context transfer. The access router/WLAN switches 162, 178 couple the WLANs 160, 176 to the Internet 166 through respective traffic control systems 164, 180.

When the communication device accesses the WLAN 160 through AP2 154, communication traffic control rules are established at the traffic control system 164 by the communication device 150 through the intermediate system 158, as shown at 182, 184. The communication device 150 is then moved and accesses the WLAN 176 through AP3 168. As the intermediate systems 156, 158, 172, 174 are provided at the APs 156, 158, 172, 174, the communication device 150 has also effectively been moved from a service area of the intermediate system 158 and the traffic control system 164 to a service area of the intermediate system 172 and the traffic control system 180, as represented at 186. AP2 154, or possibly the intermediate system 158, detects that the communication device 150 has moved, and the intermediate system 158 transmits the traffic control rules to the intermediate system 172, as shown at 188, which then establishes the traffic control rules at the traffic control system 180, at 189. This transfer of traffic control rules may be implemented as a "push" scheme, in which the intermediate system 158 is configured to automatically transmit the traffic control rules to the intermediate system 172 on having detected or being notified about the movement of the mobile communication device from its coverage, or a "pull" scheme, in which the intermediate system 172 retrieves or requests the rules on having detected or being notified about the movement of the mobile communication device into its coverage from the intermediate system 158.

As shown in Fig. 12, for the purpose of faster context establishment, communication traffic control rules for a given mobile communication device 150 should be preserved when the device moves between APs. Transfer of the traffic control rules, i.e., the communication traffic control context, when performing handoff between an old AP and a new one (or a Layer 3 handoff) can speed up the establishment of context that existed when the mobile communication device 150 was under the coverage of the old AP. This provides seamless security and the handoff process itself appears transparent to the user and the applications of the mobile communication device 150.

In the case of IEEE 802.11 WLANs, intermediate systems may reside on the AP as shown or on the Access Router/Switch as shown in Fig. 6. Those skilled in the art will appreciate that IEEE 802.11 refers to a set of specifications, available from the Institute of Electrical and Electronics Engineers, relating to WLANs. In the case of Fig. 12 where intermediate systems are implemented on APs, Inter-Access Point Protocol (IAPP) can be used to transfer communication traffic control context between APs.

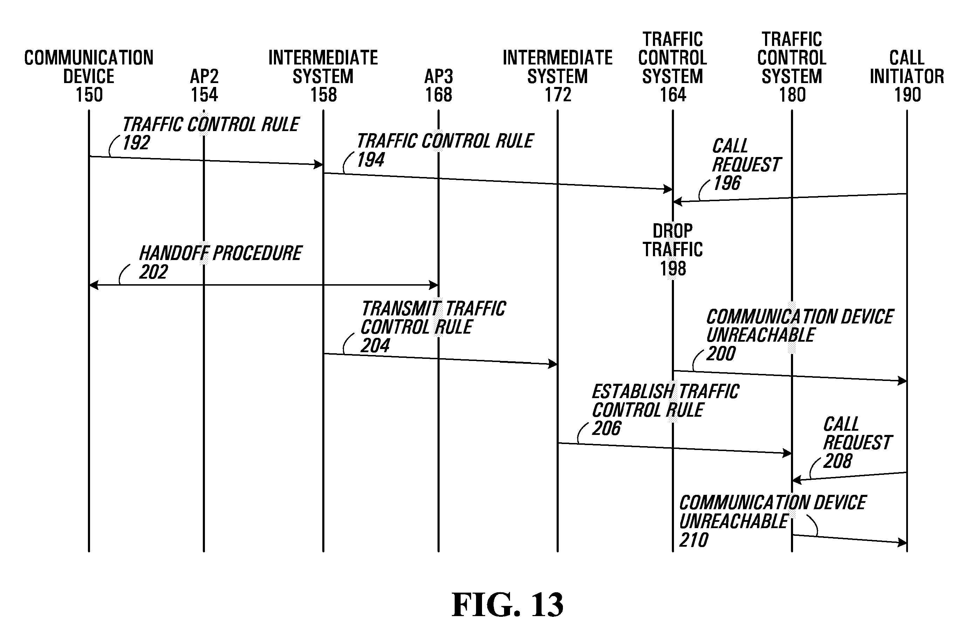

Fig. 13 is a signal flow diagram illustrating signalling between components of a communication system in performing the operations shown in Fig. 11. At 192, the mobile communication device 150 transmits a traffic control rule to AP2 154, at which the intermediate system 158 is implemented. The intermediate system 158 in turn conveys the traffic control rule to the traffic control system 164 at 194. In Fig. 13, the traffic control rule blocks calls from a call initiator 190.

A call request 196 from the call initiator 190 is blocked by the traffic control system 164 and dropped at 198. The traffic control system 164 notifies the call initiator 190 that the communication device 150 is not reachable at 200.

At some time after the traffic control rule is transmitted at 192, the communication device 150 is handed off from AP2 154 to AP3 168 at 202. The handoff is detected in this example by AP1 154 or the intermediate system 158, which transmits the traffic control rule to AP3 168, at which the intermediate system 172 is implemented, as shown at 204. The intermediate system 172 then establishes the traffic control rule at the traffic control system 180 at 206. A subsequent call request from the call initiator 190 at 208 is blocked by the traffic control system 180, which notifies the call initiator 190 at 210 that the communication device is unreachable.

In the situation where a communication device moves from a service area of an intermediate system which interacts with a traffic control system to a service area of a new intermediate system which interacts with the same traffic control system, communication traffic control context transfer to the new intermediate system may still be important. For example, with reference again to Fig. 12, if the communication device 150 initially accessed the WLAN 160 through AP1 152 and established traffic control rules at the traffic control system 164 through the intermediate system 156, then the traffic control rules are preferably transferred to the intermediate system 158 by the intermediate system 156 when the communication device 150 is moved and accesses the WLAN 160 through AP2 154. If the communication device 150 is subsequently moved as shown at 186 and described above, then the intermediate system 158 is able to transfer the traffic control rules to the intermediate system 172 at 188. Otherwise, if the traffic control rules were not transferred from the intermediate system 156 to the intermediate system 158, the traffic control rules could not be established at the traffic control system 180 unless they were again transmitted by the communication device 150.

In terms of a system for transferring communication traffic control context, context transfer may involve operations at any of a communication device, an intermediate system, and a traffic control system. The structure of these components when adapted for context transfer may be substantially similar to the examples shown in Figs. 7-9, with the addition of a detector for detecting that the communication device has moved between service areas. Where the intermediate system is responsible for context transfer, for example, the processor 108 (Fig. 9) may be further configured by software in the memory 104 to store received traffic control rules to the memory 104, to detect that a mobile communication device has moved, and to transfer the traffic control rules to a new intermediate system through a transceiver 102 responsive to the detection. The traffic control rules may then be established by the new intermediate system at a new traffic control system, if necessary, substantially as described above.

Adaptation of a communication device and/or traffic control system for context transfer will also be apparent from the foregoing.

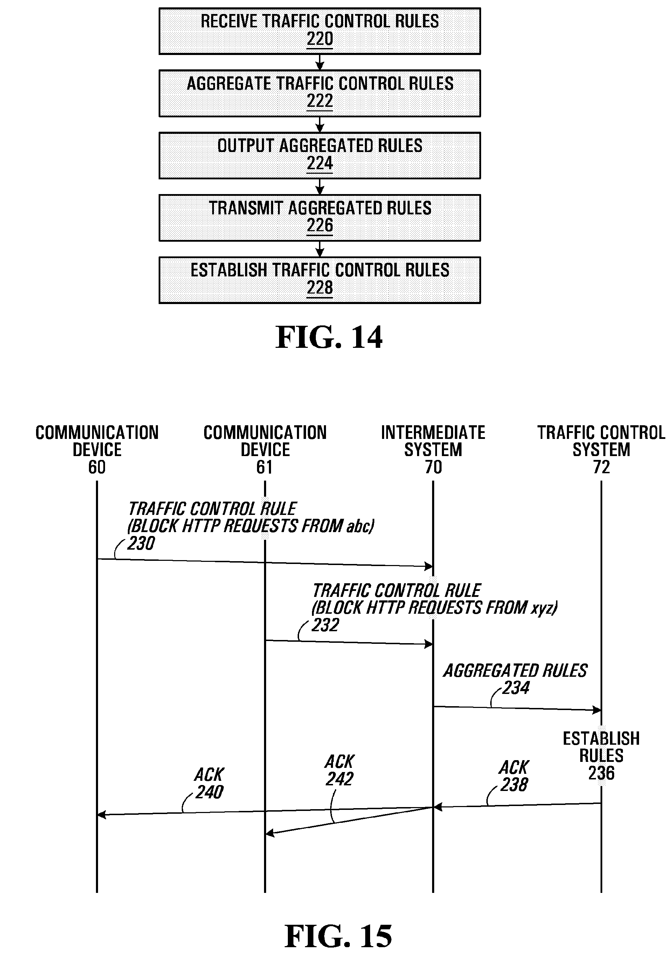

Fig. 14 is a flow diagram showing a method in accordance with yet another embodiment of the invention. The method of Fig. 14 relates to reducing the additional traffic load and the amount of additional processing and updating at a traffic control system introduced by the communication traffic control techniques disclosed herein. An intermediate system may implement intelligent aggregation mechanisms to aggregate traffic control rules and relay them to one or more traffic control systems. Various aggregation mechanisms, depending upon the type of service, for example, can be used. Aggregation by an intermediate system may significantly reduce the number of separate transmissions of traffic control rules that a traffic control system may receive from countless communication devices, and result in substantial bandwidth and processing savings.

At 220, multiple traffic control rules are received at an intermediate system. The received traffic control rules may include traffic control rules from a single communication device or multiple communication devices in a service area of the intermediate system.

The traffic control rules are aggregated at 222 and output at 224 for transmission to a traffic control system. The aggregated traffic control rules may be transmitted at 226 at a predetermined time or after a predetermined number of traffic control rules have been aggregated, for instance. In one embodiment, the traffic control rules are aggregated into a single message or request which is transmitted to the traffic control system. The aggregated traffic control rules may be transmitted to multiple traffic control systems in some embodiments.

When a traffic control system receives a transmission of aggregated traffic control rules, it establishes at 228 communication traffic control in accordance with at least one of the traffic control rules which have been aggregated. A traffic control system may process aggregated rules to identify and implement only the traffic control rules which are applicable to the traffic control system. This feature may be particularly useful if an intermediate system communicates with more than one type of traffic control system. In this case, traffic control rules intended for different types of traffic control system may be aggregated and sent to all traffic control systems.

Communication traffic control rules which are aggregated at an intermediate system may include generic traffic control rules, communication device-specific traffic control rules which are applied only to communication traffic destined for particular communication devices, or both.

Fig. 15 is a signal flow diagram illustrating signalling between components of a communication system in performing the operations shown in Fig. 14. In the scenario represented in Fig. 15, two communication devices 60, 61 communicate to the intermediate system 70 traffic control rules to be implemented at the traffic control system 72. The intermediate system 70 effectively acts as a relay between each communication device 60, 61 and the traffic control system 72, ensuring that the traffic control rules are properly transmitted to and possibly acknowledged by the traffic control system 72.

At 230, the communication device 60 transmits a traffic control rule to block HTTP requests coming from an address abc, illustratively an IP address. The communication device 61 transmits a similar traffic control rule to block HTTP requests coming another IP address, xyz, at 232. The intermediate system 70 aggregates the rules and transmits the aggregated rules to the traffic control system 72. The traffic control system 72 then implements the traffic control rules at 236 and, in the illustrated embodiment, sends an acknowledgement to the intermediate system 70 at 238. At 240 and 242, the intermediate system 70 transmits acknowledgements to each of the communication devices 60, 61.

An intermediate system which has been enabled for aggregation may have substantially the same structure as shown in Fig. 9. Traffic control rules received via the transceiver(s) 102. The traffic control rule handler 106 or an aggregation functional element, for example, aggregates the traffic control rules and outputs the aggregated traffic control rules for transmission to a traffic control system.

A traffic control system capable of processing aggregated traffic control rules may also be similar to the traffic control system 90 of Fig. 8, except that the traffic controller/filter 96 would be configured to process aggregated rules, for example by parsing individual rules from a received transmission of aggregated traffic control rules and/or identifying applicable rules.

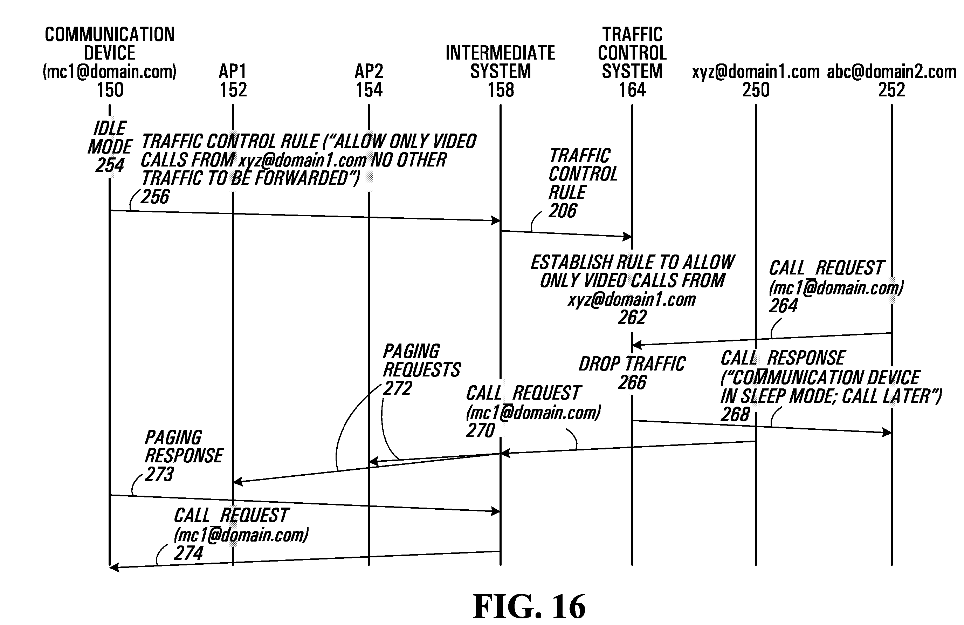

Fig. 16 is a signal flow diagram illustrating signalling between components of a communication system in an illustrative example application of an embodiment of the invention to control paging messages in a mobile communication network.

Mobile communication devices often support an idle or sleep mode in order to conserve power and radio resources. These devices can take advantage of communication traffic control as disclosed herein by requesting that a Paging Agent in the mobile communication network wake them up only when certain communication traffic arrives. Normally, the communication network would page a communication device every time it receives communication traffic destined for the communication device. As illustrated in Fig. 16 and described in further detail below, communication traffic control in accordance with traffic control rules generated at a communication device may be established at a traffic control system which is implemented either at or upstream of a Paging Agent. This allows a communication device user to set preferences as to the particular communication traffic for which a paging message is transmitted to the device.

In Fig. 16, a communication device 150, illustratively a wireless mobile communication device, is capable of going into an idle or sleep mode and interacts with a communication network implementing a paging mechanism. The APs 152, 154, the intermediate system 158, and the traffic control system 164 may be interconnected substantially as shown in Fig. 12, although other topologies are possible. In Fig. 16, a Paging Agent or paging functionality is provided at the intermediate system 158. However, paging functionality may be provided elsewhere in a communication system and will generally be dependent upon the particular type of communication network in which a communication device is to be paged.

At 254, the communication device 150, which is associated with an address mc1@domain.com, prepares to enter an idle or sleep mode, in which it only monitors a paging channel and not other control or data channels. Before entering the idle/sleep mode, the communication device 150 transmits a traffic control rule to the intermediate system 158 at 256. The traffic control rule specifies that only video calls from the communication traffic source xyz@domain1.com (250) are to be transmitted. The intermediate system 158 may either implement the traffic control rule at the paging agent, if the paging agent is configured to provide traffic control functions, or convey the traffic control rule to the traffic control system 164 as shown at 260. The traffic control rule is established at the traffic control system 164 at 262.

A subsequent call request from the communication traffic source abc@domain2.com (252) at 264 to the communication device 150 is dropped at the traffic control system 164 at 266, since the traffic control system 164 has been explicitly instructed to transmit only video calls from xyz@domain1.com. The dropped call therefore does not cause the Paging Agent at the intermediate system 158 to page (wake-up) the communication device 150. The traffic control system 164 may, however, send a response to abc@domain2.com as shown at 268, to convey that the communication device 150 would not like to be disturbed. Such a notification may be sent, for example, if the traffic control system 164 is paging-aware.

A video call request from xyz@domain1.com (250) for the communication device 150 arrives at the Paging Agent at the intermediate system 158 as shown at 270, as the traffic control system 164 allows this call request to proceed to the intermediate system 158 in accordance with the rule established at 262. The paging agent then pages for the communication device 150 at 272 within a paging area, which is associated with the APs 152, 154 in Fig. 16.

At 273, a paging response is received at the intermediate system 158 from an AP 152, 154 serving the communication device 150, and the video call request is forwarded to the communication device 150 at 274.

One further potential application of communication traffic control techniques in accordance with embodiments of the invention is parental or supervisory control. Traffic control rules that restrict the flow of electronic content which is not suitable for children can be configured manually by a subscriber. For example, an adult can configure a subscription or communication device so that adult content is blocked from reaching a child, and/or a child cannot order services that are not meant for them. This could entail rules that block adult services from adult websites, dynamic call blocking from strangers, etc. These rules could be initiated by a parent or a guardian, and need not be limited to controlling access to content by children.

Embodiments of the invention as described in detail above propose a mechanism for communication devices to request targeted control or filtering of communication traffic. Where the communication device is a mobile communication device, traffic control rules are preferably transferred within a communication network so that the traffic control rules effectively follow the communication device or user as the user roams. Mobile communication network access providers, for example, may thereby offer virtual traffic control services that both move with an end user and are under the user's control. Service discovery techniques provide one mode of offering traffic control services to and subsequently enabling these services for communication service subscribers.

With the growing use of mobile communication devices emerges the need for this type customized control of communication traffic destined to, or possibly originating from, such devices. These communication devices tend to have limited processing and power resources. There is currently a wide variety of mobile communication equipment in use, including laptops, smart phones, and PDAs, for example, each with its own functionality and network deployment (e.g., GSM, UMTS, WLAN) and associated bandwidth restrictions. Embodiments of the invention are applicable to virtually any type of communication device, and may be especially advantageous where traffic control processing is implemented upstream of a constrained communication device in a communication system.

What has been described is merely illustrative of the application of the principles of the invention. Other arrangements and methods can be implemented by those skilled in the art without departing from the scope of the present invention.

For example, the foregoing description considers in detail the establishment of communication traffic control. Further functions may also be supported. It may be desirable to provide for temporary suspension and/or cancellation of communication traffic control rules established at a traffic control system, for instance.

It should also be appreciated that many features of embodiments of the invention are not necessarily exclusive. For example, a communication device may be configured for both direct communication with some traffic control systems and indirect communication with other traffic control systems through an intermediate system.

In addition, although described primarily in the context of methods and systems, other implementations of the invention are also contemplated, as instructions stored on a machine-readable medium for example.

## Claims

1. A communication traffic control method for a mobile communication device comprising:
determining that a mobile communication device is operating within a service area of a traffic control system;
generating at the mobile communication device a traffic control rule for controlling communication traffic destined for or originating from the mobile communication device where the mobile communication device is operating within a service area of a traffic control system; and
outputting the traffic control rule for transmission to the traffic control system to establish targeted traffic control at the traffic control system in accordance with the traffic control rule.

2. The method of claim 1, further comprising:
transmitting the traffic control rule to the traffic control system, the traffic control system controlling communication traffic destined for or originating at the mobile communication device in accordance with the traffic control rule.

3. The method of claim 1 or claim 2, further comprising:
detecting that the mobile communication device has moved from the service area of the traffic control system to a new service area served by a new traffic control system; and
transmitting the traffic control rule to the new traffic control system where the mobile communication device has moved to a new service area served by a new traffic control system.

4. The method of claim 1, further comprising:
transmitting the traffic control rule to the traffic control system through an intermediate system, the intermediate system receiving the traffic control rule from the mobile communication device and transmitting the traffic control rule to the traffic control system, the traffic control system controlling communication traffic destined for or originating at the mobile communication device in accordance with the traffic control rule.

5. The method of claim 4, wherein transmitting the traffic control rule from the intermediate system to the traffic control system comprises transmitting the traffic control rule from the intermediate system to a plurality of traffic control systems.

6. The method of claim 5, further comprising:
translating the traffic control rule at the intermediate system from a generic format into a specific respective format for each of the plurality of traffic control systems.

7. The method of claim 5 or claim 6, further comprising:
authenticating the mobile communication device to the intermediate system,
wherein transmitting comprises the traffic control rule from the intermediate system to the plurality of traffic control systems where the mobile communication device is authenticated to the intermediate system.

8. The method of claim 4, wherein the traffic control rule comprises one of a plurality of traffic control rules received by the intermediate system, and wherein transmitting the traffic control rule from the intermediate system to the traffic control system comprises:
aggregating the plurality of traffic control rules; and
transmitting the aggregated traffic control rules to the traffic control system.

9. A machine-readable medium storing instructions which when executed perform the method of any one of claims 1 to 8.

10. A mobile communication device comprising:
means for determining that the mobile communication device is operating within a service area of a traffic control system;
means for generating a traffic control rule for controlling communication traffic destined for or originating at the mobile communication device where the mobile communication device is operating within a service area of a traffic control system; and
means for outputting the traffic control rule for transmission to the traffic control system to establish targeted traffic control at the traffic control system in accordance with the traffic control rule.

11. The mobile communication device of claim 10,
wherein at least one of the means for determining, the means for generating and the means for outputting is implemented by a processor configured to perform at least one of the operations of determining, generating and outputting.

12. A communication system comprising:
the mobile communication device of claim 10 or claim 11;
a communication network in which the mobile communication device is configured to operate; and
the traffic control system,
wherein the mobile communication device further comprises means for transmitting the traffic control rule to the traffic control system via the communication network, and wherein the traffic control system controls communication traffic destined for or originating at the mobile communication device in accordance with the traffic control rule.

13. The communication system of claim 12, further comprising:
means for detecting that the mobile communication device has moved from the service area of the traffic control system to a new service area served by a new traffic control system; and
means for transmitting the traffic control rule to the new traffic control system where the mobile communication device has moved to a new service area served by a new traffic control system.

14. The communication system of claim 12, further comprising:
an intermediate system,
wherein the means for transmitting transmits the traffic control rule to the traffic control system through the intermediate system, and wherein the intermediate system is configured to receive the traffic control rule from the mobile communication device and to transmit the traffic control rule to the traffic control system.

15. The communication system of claim 14, wherein the intermediate system is further configured to transmit the traffic control rule to a plurality of traffic control systems.

16. The communication system of claim 14, further comprising:
means for detecting that the mobile communication device has moved from a communication system service area served by the intermediate system to a new service area served by a new intermediate system; and
means for transmitting the traffic control rule to the new intermediate system where the mobile communication device has moved to a new service area served by a new intermediate system,
wherein the means for transmitting the traffic control rule to the new intermediate system transmits the traffic control rule to the new intermediate system responsive to at least one of: the detecting, and a request from the new intermediate system.

17. The communication system of claim 14, wherein the intermediate system is configured to receive a plurality of traffic control rules including the traffic control rule from a plurality of communication devices including the mobile communication device, and to transmit the traffic control rule to the traffic control system by aggregating the plurality of rules from the plurality of communication devices and transmitting the aggregated traffic control rules to the traffic control system.

18. A method of controlling communication traffic destined for or originating at a mobile communication device, comprising:
receiving from a mobile communication device determined to be operating within a service area of a traffic control system a traffic control rule for controlling communication traffic destined for or originating at the communication device; and
establishing at the traffic control system targeted traffic control in accordance with the traffic control rule.

19. The method of claim 18, further comprising:
detecting that the mobile communication device has moved from the service area of the traffic control system to a new service area served by a new traffic control system; and
establishing at the new traffic control system, responsive to the detecting, targeted traffic control in accordance with the traffic control rule.

20. The method of claim 18, wherein receiving comprises receiving the traffic control rule at an intermediate system, and wherein establishing comprises transmitting the traffic control rule from the intermediate system to the traffic control system, the traffic control system controlling communication traffic destined for or originating at the communication device in accordance with the traffic control rule.

21. The method of claim 20, wherein the traffic control rule comprises one of a plurality of traffic control rules received by the intermediate system, and
wherein transmitting the traffic control rule from the intermediate system to the traffic control system comprises:
aggregating the plurality of traffic control rules; and
transmitting the aggregated traffic control rules to the traffic control system.

22. A machine-readable medium storing instructions which when executed perform the method of any one of claims 18 to 21.

23. A system for controlling transmission of communication traffic, comprising:
means for receiving from a mobile communication device determined to be operating within a service area of a traffic control system a traffic control rule for controlling communication traffic destined for or originating at the mobile communication device; and
means for establishing at the traffic control system targeted traffic control in accordance with the traffic control rule.

24. The system of claim 23, wherein at least one of the means for receiving and the means for establishing is implemented in a processor configured to receive the traffic control rule, establish the communication traffic control, or both.

25. The system of claim 23 or claim 24, further comprising:
means for detecting that the mobile communication device has moved from the service area of the traffic control system to a new service area served by a new traffic control system,
wherein the means for establishing further establishes at the new traffic control system targeted traffic control in accordance with the traffic control rule where the mobile communication device has moved to a new service area served by a new traffic control system.

26. The system of claim 23 or claim 24, wherein the means for receiving and the means for establishing comprise an intermediate system configured to receive the traffic control rule and to establish the targeted traffic control by transmitting the traffic control rule to the traffic control system.

27. The system of claim 26, wherein the intermediate system is configured to receive a plurality of traffic control rules including the traffic control rule, to aggregate the plurality of traffic control rules, and to transmit the aggregated traffic control rules to the traffic control system.

28. A method of controlling flow of communication traffic in accordance with a traffic control rule established at a traffic control system, comprising:
detecting that a mobile communication device has moved from a communication system service area served by the traffic control system to a new service area served by a new traffic control system; and
establishing at the new traffic control system, responsive to the detecting, communication traffic control in accordance with the traffic control rule for communication traffic destined for or originating at the mobile communication device.

29. The method of claim 28, wherein establishing comprises one of:
transmitting the traffic control rule to the new traffic control system responsive to the detecting; and
transmitting a request from the new traffic control system to the traffic control system responsive to the detecting, the traffic control system transmitting the traffic control rule to the new traffic control system responsive to the request.

30. The method of claim 28, wherein the traffic control rule is established at the traffic control system via an intermediate system, the method further comprising:
detecting that the mobile communication device has moved from a communication system service area served by the intermediate system to a new service area served by a new intermediate system; and
transmitting the traffic control rule to the new intermediate system where the communication device has moved from a communication system service area served by the intermediate system to a new service area served by a new intermediate system.

31. A machine-readable medium storing instructions which when executed perform the method of any one of claims 28 to 30.

32. A system for controlling flow of communication traffic in accordance with a traffic control rule established at a traffic control system, comprising:
means for detecting that a mobile communication device has moved from a communication system service area served by the traffic control system to a new service area served by a new traffic control system; and
means for establishing at the new traffic control system, responsive to the detecting, communication traffic control in accordance with the traffic control rule for communication traffic destined for or originating at the communication device.

33. The system of claim 32, wherein:
at least one of the mobile communication device and the traffic control system comprises the means for detecting; and
at least one of the mobile communication device and the traffic control system comprises the means for establishing.

34. The system of claim 32, wherein the traffic control rule is established at the traffic control system via an intermediate system, the system further comprising:
means for detecting that the mobile communication device has moved from a communication system service area served by the intermediate system to a new service area served by a new intermediate system; and
means for transmitting the traffic control rule to the new intermediate system where the mobile communication device has moved from a communication system service area served by the intermediate system to a new service area served by a new intermediate system.

35. The system of claim 34, wherein:
at least one of the mobile communication device, the intermediate system, and the traffic control system comprises the means for detecting that the mobile communication device has moved from a communication system service area served by the traffic control system to a new service area served by a new traffic control system;
at least one of the mobile communication device, the intermediate system, the new intermediate system, the traffic control system, and the new traffic control system comprises the means for establishing; and
at least one of the mobile communication device, the intermediate system, and the traffic control system comprises the means for transmitting.

36. A communication traffic control method comprising:
receiving a plurality of traffic control rules for controlling communication traffic;
aggregating the respective traffic control rules; and
outputting the aggregated traffic control rules for transmission to a plurality of traffic control systems to establish communication traffic control at the plurality of traffic control systems in accordance with the plurality of traffic control rules.

37. The method of claim 36, wherein the plurality of traffic control rules comprises at least one of: a traffic control rule specific to a particular communication device and rules received from a plurality of communication devices.

38. The method of claim 36 or claim 37, further comprising:
transmitting the aggregated traffic control rules to the plurality of traffic control systems, the traffic control systems establishing communication traffic control in accordance with the plurality of traffic control rules.

39. A machine-readable medium storing instructions which when executed perform the method of any one of claims 36 to 38.

40. A system for establishing communication traffic control, comprising:
means for receiving a plurality of traffic control rules for controlling communication traffic;
means for aggregating the respective traffic control rules; and
means for outputting the aggregated traffic control rules for transmission to a plurality of traffic control systems to establish communication traffic control at the plurality of traffic control systems in accordance with the plurality of traffic control rules.

41. The system of claim 40, wherein the means for receiving, the means for aggregating, and the means for outputting comprise a communication device for which the communication traffic control is to be established.

42. A communication system comprising:
at least one communication device configured to generate traffic control rules;
an intermediate system comprising the system of claim 40; and
a plurality of traffic control systems,
wherein the intermediate system further comprises means for transmitting the aggregated traffic control rules to the plurality of traffic control systems.

43. A method of establishing communication traffic control at a traffic control system, comprising:
receiving at a traffic control system aggregated traffic control rules for controlling communication traffic, the aggregated traffic control rules comprising a plurality of traffic control rules which are received from at least one communication device, aggregated, and transmitted to a plurality of traffic control systems including the traffic control system by an intermediate system; and
establishing communication traffic control for communication traffic received at the traffic control system in accordance with at least one of the plurality of traffic control rules.
